# EUROPÄISCHE PATENTANMELDUNG

(11) **EP 1 674 390 A1**
(43) Veröffentlichungstag der Anmeldung: **28.06.2006**
(21) Anmeldenummer: 05024048.0
(22) Anmeldetag: 04.11.2005
(51) Int. Cl.: B64G 1/64

(54) **Auswurfvorrichtung für drallstabilisierte Behälter**

(30) Priorität: 23.12.2004 DE 102004063113
(71) Anmelder: EADS Space Transportation GmbH, 28199 Bremen (DE)
(72) Erfinder: Köhler, Horst, 28279 Bremen (DE)
(74) Vertreter: Hansmann, Dierk

(57) **Zusammenfassung**

Eine Vorrichtung zum Auswurf von drallstabilisierten Behältern (14) aus einem Raumflugkörper, bei der der auszustoßende Behälter über eine im Raumflugkörper angeordnete Antriebseinheit in eine kombinierte Rotations- und Translationsbewegung versetzt wird und bei der Mittel (2,3) zum Haltern und zum Führen des auszustoßenden Behälters vorgesehen sind, besteht aus wenigstens zwei wendelförmigen Führungselementen (2,3), die zusammen mit einer Bodeneinheit (6) sowie einem Ringelement (5) einen zylinderförmigen Führungskäfig (1) zur Aufnahme eines auszuwerfenden Behälters bilden. In der Bodeneinheit ist eine aus einer Spiralfeder (7) bestehende Antriebseinheit angeordnet, die kraftschlüssig mit dem Boden des Behälters in Eingriff bringbar ist. Ferner ist der Behälter auf seiner Außenfläche mit Kontaktelementen (15) versehen, die in den Führungselementen bewegbar sind.

## Beschreibung

Die Erfindung betrifft ein Vorrichtung zum Auswurf von drallstabilisierten, in etwa zylindrisch ausgebildeten Behältern aus einem Raumflugkörper, wobei der auszustoßende Behälter über eine im Raumflugkörper angeordnete Antriebseinheit in eine kombinierte Rotations- und Translationsbewegung versetzt wird und wobei Mittel zum Haltern und zum Führen des auszustoßenden Behälters vorgesehen sind.

Um Versuchsproben von einer Raumstation, beispielsweise der International Space Station, ISS, auf die Erde zurückzubringen, stehen derzeit praktisch nur die als Space Shuttle bezeichneten Raumtransporter zur Verfügung. Für Versorgungsflüge von der Erde zur ISS können darüber hinaus auch Raketen, wie das ARIANE Transfer Vehicle, ATV, und die russische Progress Kapsel, eingesetzt werden.

Durch eine Erweiterung des ATV bzw. der Progresskapsel um einem Nutzlast-Rückkehrbehälter besteht die Möglichkeit, unabhängig vom Space Shuttle Versuchsproben auf die Erde zurück zu transportieren. Dabei wird der Rückkehrbehälter in der Ladeluke des ATV oder Progresskapsel montiert und, bevor das ATV bzw. die Progresskapsel in die Erdatmosphäre eintritt und verglüht, aus diesem ausgeworfen. Der Behälter selbst ist dabei mit einem Hitzeschutzschild ausgestattet, das den unbeschadeten Wiedereintritt in die Erdatmosphäre ermöglicht.

Ein derartiger Rückkehrbehälter soll in der Lage sein, Versuchsproben bis zu einer Masse von 360 kg auf die Erde zurückzuführen. Um diesen bei der Rückkehr zuverlässig aus dem Transportvehikel auszustoßen, wird eine Auswurfvorrichtung benötigt, die dem Behälter eine translatorische Geschwindigkeit in der Größenordnung von etwa 1 m/s zu verleihen vermag. Ferner muß sie, zur Stabilisierung, dem Behälter einen Drehimpuls um seine Längsachse vermitteln.

In der Vergangenheit wurde eine Reihe von Auswurfvorrichtungen für Raumflugkörper aus Satelliten entwickelt, so zum Beispiel zur Anwendung in Spionagesatelliten zum Ausstoß von Rückkehrkapseln mit belichteten Filmen. Bei diesen Anwendungen waren die Masse und Dimensionen der ausgestoßenen Subkörper vergleichsweise gering. Weitere Vorrichtungen wurden für die Aussetzung von drehachsen- oder spinstablisierten Kommunikationssatelliten oder von Kleinsatelliten aus dem Space Shuttle entwickelt. Bei ersteren handelt es sich um Flugkörper mit deutlich größeren Dimensionen, beispielsweise mit Durchmessern größer als 2,5 Metern, und mit einer vergleichsweise hohen Masse, bei letzteren um Flugkörper mit geringerer Dimension und kleinerer Masse. Ähnliche Vorrichtungen sind auch bereits für Wiedereintrittskapseln mit mittleren Dimensionen vorgeschlagen geworden.

Ein wesentlicher Nachteil der bisher bekannt gewordenen Ausstoßvorrichtungen liegt in ihrem verhältnismäßig hohen Gewicht und ihrem komplexen Aufbau, der zu Fehlfunktionen führen kann.

Der Erfindung liegt die Aufgabe zugrunde, eine Ausstoßvorrichtung der eingangs genannten Art so auszubilden, daß sie inhärent funktionssicher, zudem leicht und zuverlässig ist und den auszustoßenden Behälter in eine vorab exakt festlegbare Kombination aus Translations- und Rotationsbewegung zu versetzen vermag.

Diese Aufgabe wird dadurch gelöst, daß bei einer derartigen Vorrichtung wenigstens zwei wendelförmige Führungselemente vorgesehen sind, die zusammen mit einer Bodeneinheit sowie einem Ringelement einen zylinderförmigen Führungskäfig zur Aufnahme eines auszuwerfenden Behälters bilden, wobei in der Bodeneinheit eine aus einer Spiralfeder bestehende Antriebseinheit angeordnet ist, die kraftschlüssig mit dem Boden des Behälters in Eingriff bringbar ist, und daß der Behälter auf seiner Außenfläche mit Kontaktelementen versehen ist, die in den Führungselementen bewegbar sind.

Die erfindungsgemäße Vorrichtung verwendet als Drehantrieb eine Dreh- oder Spiralfeder und kombiniert die Erzeugung der Rotationsbewegung zur Spinstabilisierung des auszustoßenden Behälters mit der für den Ausstoßvorgang erforderlichen Translationsbewegung dadurch, daß der auszuwerfende Behälter in einem spiralförmigen Führungskäfig bewegt wird, wodurch dem auszustoßenden Behälter eine Rotationsbewegung aufgeprägt wird. Nach dem Einbringen des Behälters in den Führungskäfig liegt der Behälter zunächst auf der Bodeneinheit auf, die zugleich Antriebseinheit beinhaltet. Durch das Rotieren in den aufwärts gerichteten Führungswendeln wird dem Behälter zugleich in eine translatorische Bewegung aufgeprägt, so daß die gewünschte Kombination aus Rotations- und Translationsbewegung des Behälters bei dessen Ausstoßvorgang erzielt wird.

Diese Ausbildung der Vorrichtung gemäß der Erfindung bietet eine Reihe von Vorteilen, zu deren wesentlichen die Vermeidung von Explosivstoffen in einem Raumfahrzeug und damit Eliminierung eines erheblichen Gefährdungspotentials für die Astronauten ebenso gehören wie die Minimierung von Gewicht und Volumen der Mechanik für die Drallstabilisierung sowie für den Auswurf und damit die Minimierung der Gesamtmasse des Raumflugsystem bzw. die Maximierung der verfügbaren Nutzlastmasse und des Nutzlastvolumens. Weitere Vorteile liegen in der Reduzierung der Komplexität des Auswurfmechanismus durch eine Verringerung der Anzahl der erforderlichen mechanischen und elektrischen Funktionsteile und damit einhergehend in der Maximierung der Zuverlässigkeit und der Effizienz der Anordnung. Dabei bedarf der Ausstoßvorgang aufgrund der gemäß der Erfindung vorgesehenen Verwendung einer Drehfeder als Antriebselement zudem keiner elektrischen Energie seitens des ausstoßenden Raumflugkörpers oder des Behälters, wodurch spezielle Anforderungen an eine Starkstromversorgung des Behälters bzw. des Ausstoßmechanismus im Raumflugkörper vermieden werden.

Nachfolgend soll die Erfindung anhand eines in der Zeichnung dargestellten Ausführungsbeispiels näher erläutert werden. Es zeigen
- Fig. 1: eine perspektivische Darstellung der Gesamtanordnung einer Auswurfvorrichtung mit einem in ihrem Inneren angeordneten auszustoßenden Behälter,

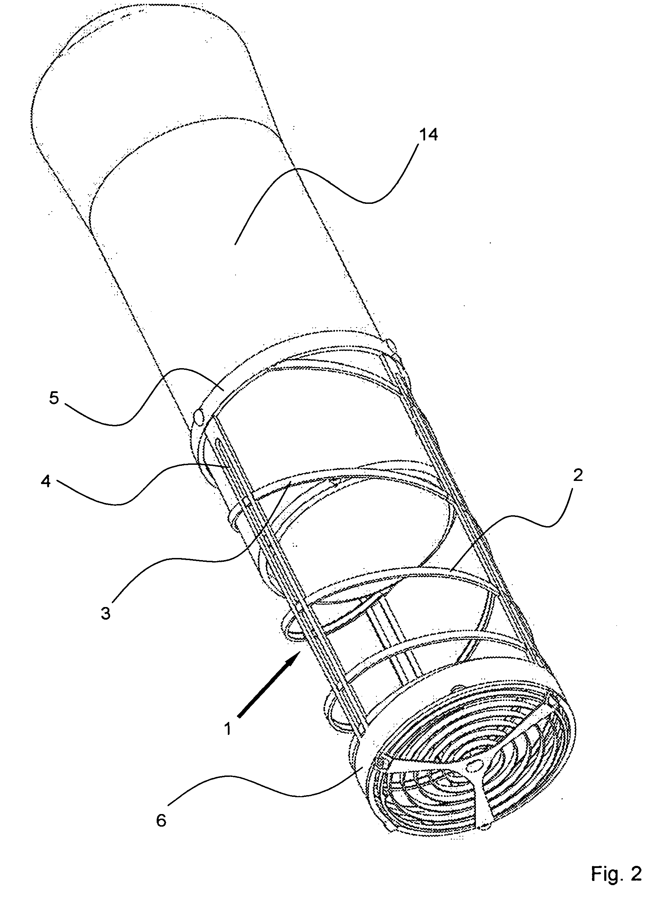

- Fig. 2: die Anordnung gemäß Fig. 1 während des Starts eines auszustoßenden Behälters,
- Fig. 3 und 4: eine Detaildarstellung einer ersten Ausführungsform des Bodenbereichs der Anordnung gemäß Fig. 1, jeweils von oben und unten betrachtet,
- Fig. 5 und 6: eine Detaildarstellung einer zweiten Ausführungsform des Bodenbereichs der Anordnung gemäß Fig. 1, jeweils von oben und unten betrachtet,
- Fig. 7: einen Schnitt durch einen auszustoßenden Behälter und
- Fig. 8: eine Detaildarstellung der Anordnung gemäß Fig. 7.

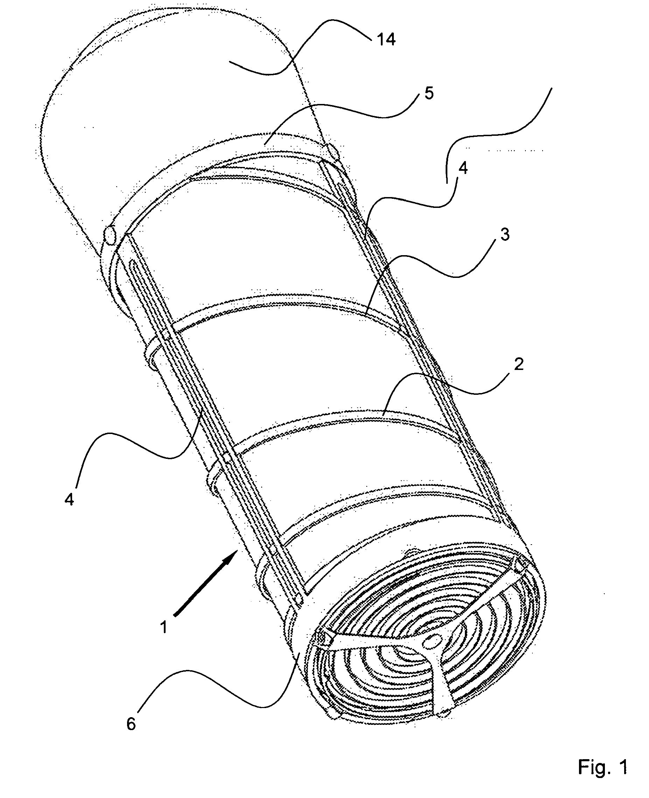

Die in Fig. 1 dargestellte Auswurfvorrichtung besteht aus einem zylinderförmigen Führungskäfig 1, der im wesentlichen von zwei wendelförmigen Führungselementen oder Führungswendeln 2 und 3 gebildet wird. Die beiden Führungswendeln 2 und 3 sind über, im Fall des hier dargestellten Ausführungsbeispiels dre,i Stangen 4 stabilisiert. An den oberen Enden der Stangen 4 ist ein Ringelement 5 angeordnet, das den oberen Abschluß des Führungskäfigs 1 bildet, während die unteren Enden der Stangen eine Bodeneinheit 6 tragen, in der eine Antriebseinrichtung angeordnet ist.

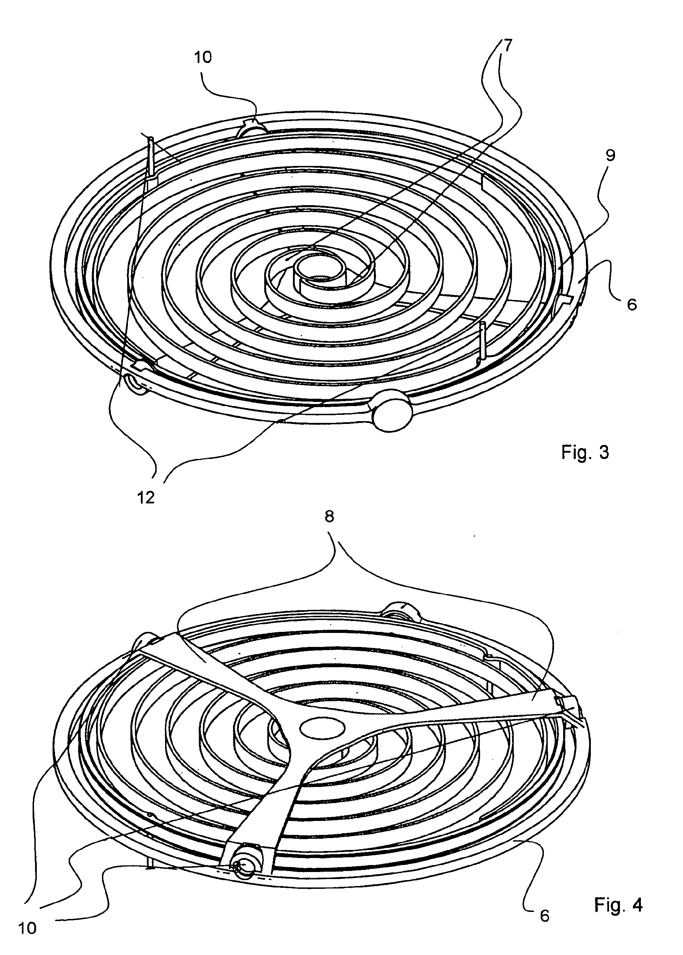

Diese Antriebseinrichtung besteht, wie aus den Figuren 3 und 4 ersichtlich, aus einer Dreh- oder Spiralfeder 7, die praktisch das gesamte Innere der Bodeneinheit 6 ausfüllt und deren Zentrum über Speichen 8 fest mit der Struktur der Bodeneinheit 6 verbunden ist, während die äußeren Enden ihrer Spiralarme einen Laufring 9 tragen, der im Inneren der Struktur der Bodeneinheit 6 auf drei Laufrollen 10 frei drehbar ist. Letztere sind ebenso an der Struktur der Bodeneinheit 6 gehaltert wie ein Hubmagnet 11, mit dem der Laufring 9 gegenüber der Bodeneinheit 6 festgesetzt werden kann. Schließlich sind an der Spiralfeder 7 bzw. am Laufring 9 zwei Mitnehmerzapfen 12 angebracht, die mit entsprechenden Ausnehmungen 13 im Boden des auszustoßenden Behälters 14 in Eingriff bringbar sind.

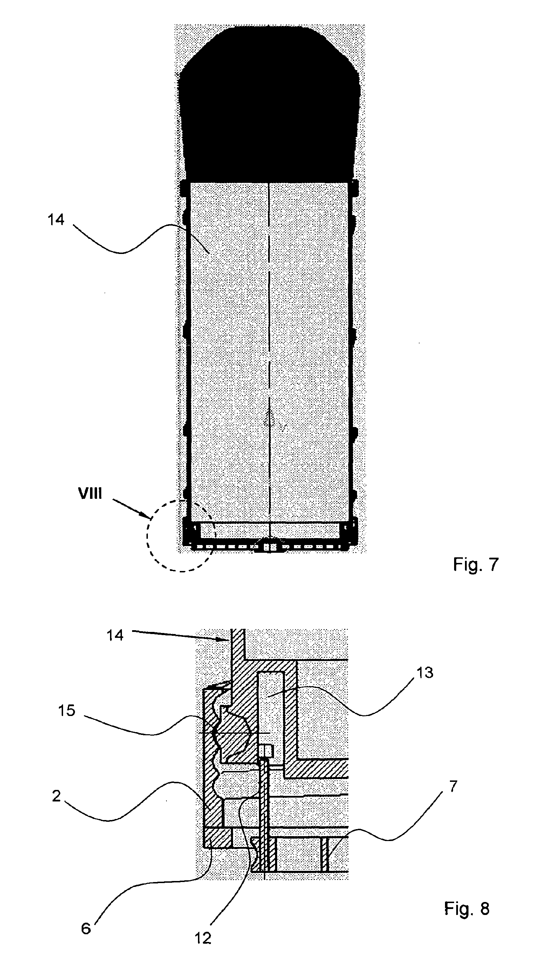

Die beiden um 180 ° versetzt angeordneten Wendelführungen 2 und 3 weisen ein angenähert U-förmiges Profil auf und dienen zur Aufnahme von Kugelrollen 15, die, wie aus Fig. 8 ersichtlich, am Umfang des Behälters 10 in dessen Bodenbereich angeordnet sind und die in den Wendelführungen 2 und 3 laufen. Bei dem hier dargestellten bevorzugten Ausführungsbeispiel weisen unterschiedliche Bereiche der Wendelführungen 2 und 3 unterschiedliche Steigungen auf, beginnend mit einer Anlaufphase im Bereich der Bodeneinheit, in der etwa 1,5 Umdrehungen mit einer Steigung von 40 mm vorgesehen sind, an die sich ein Bereich mit einem linearen Anstieg der Steigung bis auf 1000 mm anschließt, wobei diese Steigung von 1000 mm/U sich über etwa 0,75 Umdrehung im Ausschubbereich erstreckt.

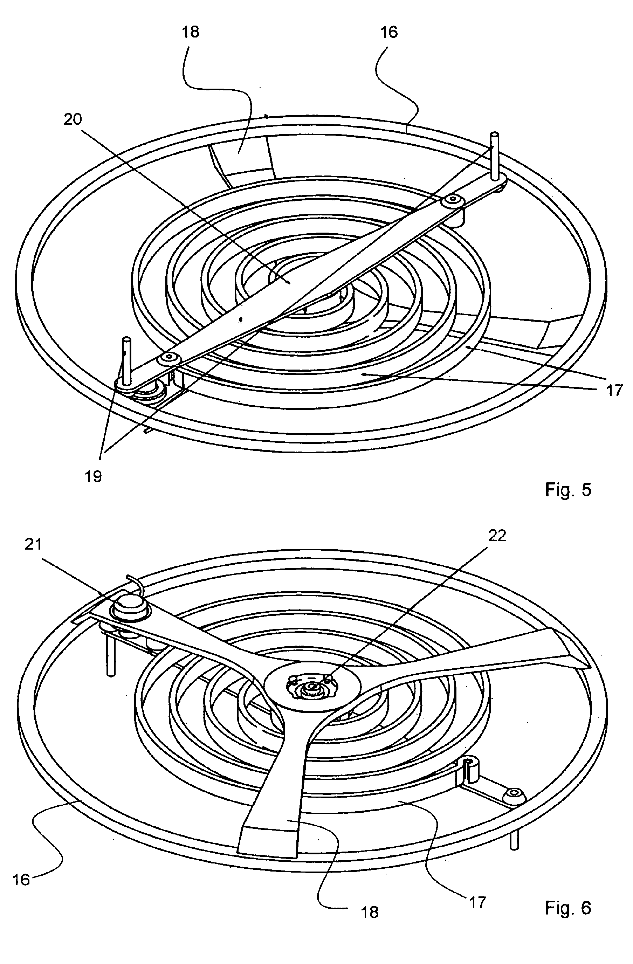

Die in den Figuren 5 und 6 gezeigte alternative Ausbildung einer Bodeneinheit 16 unterscheidet sich von der vorangehend beschriebenen dahingehend, daß hier zwar ebenfalls eine Spiralfeder 17 über Speichen 18 mit der Struktur der Bodeneinheit 16 verbunden ist, daß aber in diesem Fall die Übertragung der Federkraft der Spiralfeder 17 auf den Behälterboden über Mitnehmerzapfen 19 erfolgt, die an den Enden eines Quersteges 20 gehaltert sind. Dieser Quersteg 20 ist fest mit den frei drehbaren Enden der Spiralfeder 17 verbunden, deren Zentrum über eine Lagerung 22 an der Struktur der Bodeneinheit 16 befestigt ist. Auch in diesem Fall ist wieder ein Hubmagnet 21 vorgesehen, mit dem in diesem Fall der Quersteg 20 an der Bodeneinheit 16 festgesetzt werden kann.

Vor dem Auswurf wird der Behälter 14 gleichsam gegenläufig in den Führungskäfig 1, dessen Innendurchmesser geringfügig größer als der Außendurchmesser der Behälters 14 ist, eingeschraubt, wobei sich die Kugeln 15 in den Wendelführungen 2 und 3 bis in den Bereich der Bodeneinheit 6 bzw. 16 bewegen. Dadurch wird zugleich über die Mitnehmerzapfen 12 bzw. 19 die Spiralfeder 7 bzw. 17 vorgespannt. In diesem Zustand wird die Anordnung durch Betätigung des Hubmagneten 11 bzw. 21 festgesetzt und im übergeordneten Raumflugkörper, aus dem der Behälter ausgestoßen werden soll, in die Ausstoßposition gebracht und durch Fixierung des Führungskäfigs 1 an der Struktur des Raumflugkörpers für den Auswurf installiert.

Für die Initiierung dieses Auswurfs wird durch Aktivierung des Hubmagneten 11 bzw. 21 der Laufring 9 bzw. der Quersteg 19 freigegeben, die Spiralfeder 7 bzw. 17 beginnt, sich zu entspannen und versetzt über die Mitnehmerzapfen 12 bzw. 19 den Behälter 14 in Rotation. Nach etwa einer Umdrehung ist die Feder vollständig entspannt und ihre gespeicherte Energie ist vollständig auf den Behälter 14 übertragen. Durch seine Rotation und aufgrund der Wendelführungen 2 und 3 dreht sich der Behälter 14 um etwa 40 mm aus der Bodeneinheit 6 bzw. 16 heraus, wodurch die Aufnahmen 13 am Behälter 14 außer Eingriff mit den Mitnehmerzapfen 12 bzw. 19 gelangen. Nach weiteren etwa 1.5 Umdrehungen erreicht die Wendelführung die gewünschte Steigung, wodurch zugleich die erforderliche translatorische Endgeschwindigkeit des Behälters 14 erreicht wird. Nach weiteren etwa 0,75 Umdrehungen wird der Behälter 14 schließlich drallstabilisiert ausgeworfen.

## Patentansprüche

1. Vorrichtung zum Auswurf von drallstabilisierten, in etwa zylindrisch ausgebildeten Behältern aus einem Raumflugkörper, wobei der auszustoßende Behälter über eine im Raumflugkörper angeordnete Antriebseinheit in eine kombinierte Rotations- und Translationsbewegung versetzt wird und wobei Mittel zum Haltern und zum Führen des auszustoßenden Behälters vorgesehen sind, **dadurch gekennzeichnet, daß** wenigstens zwei wendelförmige Führungselemente (1, 2) vorgesehen sind, die zusammen mit einer Bodeneinheit (6, 16) sowie einem Ringelement (5) einen zylinderförmigen Führungskäfig (3) zur Aufnahme eines auszuwerfenden Behälters (14) bilden, wobei in der Bodeneinheit (6, 16) eine aus einer Spiralfeder (7, 17) bestehende Antriebseinheit angeordnet ist, die kraftschlüssig mit dem Boden des Behälters (14) in Eingriff bringbar ist, und daß der Behälter (14) auf seiner Außenfläche mit Kontaktelementen (15) versehen ist, die in den Führungselementen (1, 2) bewegbar sind.

2. Vorrichtung nach Anspruch 1, **dadurch gekennzeichnet, daß** die Führungselemente (1, 2) an mit der Bodeneinheit (6, 16) sowie mit dem Ringelement (5) verbundenen Stangen (4) fixiert sind.

3. Vorrichtung nach Anspruch 1 oder 2, **dadurch gekennzeichnet, daß** die Spiralfeder (7, 17) über Mitnehmerzapfen (12, 19), die in zugeordnete Ausnehmungen (13) im Boden des Behälters (14) greifen, kraftschlüssig mit dem Behälter (14) in Eingriff bringbar ist.

4. Vorrichtung nach einem der Ansprüche 1 bis 3, **dadurch gekennzeichnet, daß** die Spiralfeder (7, 17) über einen Hubmagneten (11, 21) arretierbar ist.

5. Vorrichtung nach einem der Ansprüche 1 bis 4, **dadurch gekennzeichnet, daß** die Kontaktelemente aus Kugelrollen (15) bestehen.

6. Vorrichtung nach einem der Ansprüche 1 bis 5, **dadurch gekennzeichnet, daß** die wendelförmigen Führungselemente (1, 2) in verschiedenen Bereichen unterschiedliche Steigungen aufweisen.
